# EUROPEAN PATENT APPLICATION

(11) **EP 4 692 609 A1**
(43) Date of publication of application: **11.02.2026**
(21) Application number: 24784570.4
(22) Date of filing: 19.01.2024
(51) Int. Cl.: F16K 11/00

(54) **FLOW PATH SWITCHING VALVE**

(30) Priority: 04.04.2023 JP 2023060976
(71) Applicant: Fujikoki Corporation, Tokyo 158-0082 (JP)
(72) Inventor: KONDO, Daisuke, Tokyo 158-0082 (JP); HARA, Seiichi, Tokyo 158-0082 (JP)
(74) Representative: Ter Meer Steinmeister & Partner
(86) International application number: PCT/JP2024/001521
(87) International publication number: WO 2024/209767

(57) **Abstract**

A flow path switching valve 10 is configured to supply a fluid to at least two elements that use the fluid as a heat medium, and has a parallel mode in which the fluid is individually supplied to the elements, and a series mode in which the fluid is supplied to the at least two elements in series.

## Description

### Technical Field

The present invention relates to a flow path switching valve.

### Background Art

Japanese Patent Application Laid-Open (JP-A) No. 2021-67366 discloses a valve (flow path switching valve) to be provided in a circulation circuit of cooling water for an automobile.

### SUMMARY OF INVENTION

### Technical Problem

However, the above-described conventional example has no degree of freedom because the number of connection ports and the combination of flow paths are fixed according to the specification, and it is considered that a change in the specification requires starting over from the design.

An object of the invention is to enable supply of a fluid in a plurality of modes to a plurality of elements that use the fluid as a heat medium.

### Solution to Problem

A flow path switching valve according to a first aspect is configured to supply a fluid to at least two elements that use the fluid as a heat medium, and the flow path switching valve has: a parallel mode in which the fluid is individually supplied to the elements; and a series mode in which the fluid is supplied to the at least two elements in series.

This flow path switching valve can supply a fluid to at least two elements that use the fluid as a heat medium, and has the parallel mode in which the fluid is individually supplied to the elements and the series mode in which the fluid is supplied to the at least two elements in series, and thus can set a plurality of modes of supplying a fluid to a plurality of elements.

In a second aspect, in the flow path switching valve according to the first aspect, the at least two elements includes three elements, and the parallel mode and the series mode each have: a mode A in which the fluid is supplied to the three elements; and a mode B in which the fluid is supplied to two of the three elements.

This flow path switching valve has the mode A in which the fluid is supplied to the three elements; and the mode B in which the fluid is supplied to two of the three elements, and thus can set further many modes of supplying a fluid to a plurality of elements that use the fluid as a heat medium.

In a third aspect, the flow path switching valve according to the first or the second aspect includes a valve unit including: a valve body that includes a valve chest formed inside the valve body, and includes a first inlet/outlet opening, a second inlet/outlet opening, and a third inlet/outlet opening that are formed on a wall surface forming the valve chest, and the fluid entering or exiting through each of the first inlet/outlet opening, the second inlet/outlet opening, the third inlet/outlet opening; a valve element that is rotatably disposed in the valve chest and at which a flow path is formed; a first flow path that communicates with the first inlet/outlet opening; a second flow path that is provided in parallel with the first flow path with the valve body interposed between the first flow path and the second flow path and that communicates with the second inlet/outlet opening; and a third flow path that communicates with the third inlet/outlet opening and has an opening at an opposite side from the third inlet/outlet opening, wherein: the first flow path and the second flow path of other valve units are connected to the first flow path and the second flow path of the valve unit, to configure a first valve unit group in which four of the valve units are connected in series, a second valve unit group, in which three of the valve units are connected in series, is configured in addition to the first valve unit group, the second valve unit group is connected to the first valve unit group so as to overlap with the first valve unit group in a direction of a rotation axis of the valve element in the first valve unit group, and the flow path switching valve further includes a rotation drive unit that is connected to the valve unit in the first valve unit group and that rotates two of the valve elements overlapping in the direction of the rotation axis in conjunction, such that a communicated state among the first inlet/outlet opening, the second inlet/outlet opening, and the third inlet/outlet opening is selectively switched through the flow path of the valve element.

In this flow path switching valve, in one valve unit, a communicated state among the first inlet/outlet opening, the second inlet/outlet opening, and the third inlet/outlet opening of the valve chest can be selectively switched through the flow path of the valve element by rotating the valve element.

In this flow path switching valve, the first valve unit group is configured in which four valve units are connected in series, and in addition to the first valve unit group, the second valve unit group is configured in which three valve units are connected in series. The second valve unit group is connected to the first valve unit group so as to overlap with the first valve unit group in the direction of the rotation axis of the valve element in the first valve unit group. The rotation drive unit can selectively switch a communicated state among the first inlet/outlet opening, the second inlet/outlet opening, and the third inlet/outlet opening of the valve chest in each valve unit through the flow path of the valve element by rotating two valve elements overlapping in the direction of the rotation axis of the valve element in conjunction.

Connecting the valve units vertically and horizontally in this manner can make the flow path switching valve compact.

In a fourth aspect, in the flow path switching valve according to the third aspect, a heat exchanger configured to apply heat to the fluid is connectable between the second flow path of the first valve unit group and the second flow path of the second valve unit group, a first element among the three elements is connectable between the first flow path of the first valve unit group and the first flow path of the second valve unit group, a second element among the three elements is connectable between the third flow path of one of the valve units in the first valve unit group and the third flow path of one of the valve units in the second valve unit group, and a third element among the three elements is connectable between the third flow path of another of the valve units in the first valve unit group and the third flow path of another of the valve units in the second valve unit group.

This flow path switching valve can realize the parallel mode in which the fluid is individually supplied to each of the first element, the second element, and the third element and the series mode in which the fluid is supplied to the first element, the second element, and the third element in series by switching the flow path of the fluid to which heat is applied by the heat exchanger.

### Advantageous Effects of Invention

According to the invention, a fluid can be supplied in a plurality of modes to a plurality of elements that use the fluid as a heat medium.

### BRIEF DESCRIPTION OF DRAWINGS

Fig. 1 is a block diagram illustrating a mode A (pattern 1) of a parallel mode among switching modes of a flow path switching valve according to an embodiment of the invention.
Fig. 2 is a block diagram illustrating a mode A (pattern 2) of a series mode among switching modes of a flow path switching valve according to an embodiment of the invention.
Fig. 3 is a block diagram illustrating a mode B (pattern 3) of a series mode among switching modes of a flow path switching valve according to an embodiment of the invention.
Fig. 4 is a block diagram illustrating a mode B (pattern 4) of a parallel mode among switching modes of a flow path switching valve according to an embodiment of the invention.
Fig. 5 is a perspective view illustrating an overall configuration of a flow path switching valve according to an embodiment of the invention.
Fig. 6 is a partially broken perspective view illustrating a flow path switching valve in which two valve units overlap each other and two valve elements are rotated by one rotation drive unit.
Fig. 7 is a partially broken perspective view illustrating a valve unit.
Fig. 8 is a partially broken perspective view illustrating a valve unit.
Fig. 9 is a front view illustrating a state in which a valve unit is viewed from a male joint side of a first flow path.
Fig. 10 is a partial sectional view illustrating a state in which a valve unit is viewed from a side of an opening of a third flow path and a second flow path is cut in the radial direction.
Fig. 11 is a front view illustrating a valve element.
Fig. 12 is a bottom view illustrating a valve element.
Fig. 13 is an enlarged sectional view illustrating a state in which an opening portion provided in the middle of a first flow path is closed by a lid member.
Fig. 14 is a sectional view illustrating a configuration of a flow path switching valve including two valve units overlapping each other in which, in one valve unit, a portion overlapping the other valve unit serves as a lid that closes a valve chest of the other valve unit.

### DESCRIPTION OF EMBODIMENTS

Hereinafter, embodiments for carrying out the invention will be described with reference to the drawings. Constituent elements denoted by the same reference signs in the drawings mean the same constituent elements. Note that overlapping descriptions and overlapping reference signs may be omitted in the embodiments described below. All of the drawings used in the following description are schematic, and a dimensional relationship among elements, a ratio among elements, and the like illustrated in a drawing do not necessarily coincide with actual ones. Dimensional relationships among elements, ratios among elements, and the like in a plurality of drawings also do not necessarily coincide with each other.

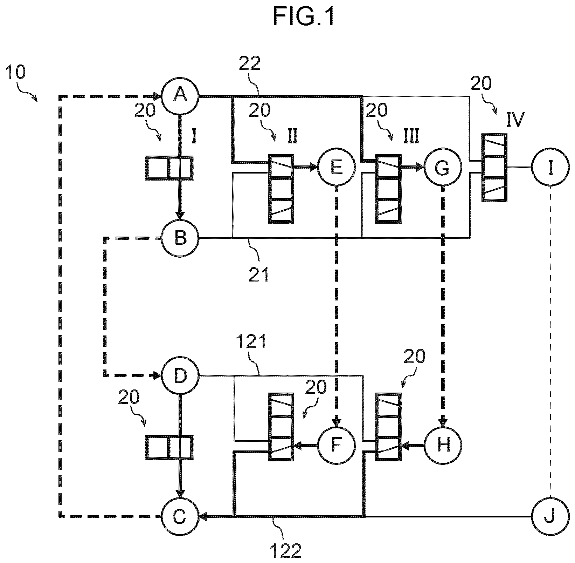

In the present description, descriptions indicating the position and the direction such as up and down, left and right, and front and rear are based on the direction arrow symbol in Fig. 1, and does not refer to the position and the direction in an actual use state. In Fig. 1, "U" indicates the upward direction (upper side),"D" indicates the downward direction (lower side), "LH" indicates the left direction (left side),"RH" indicates the right direction (right side), "F" indicates the front direction (front side), and "R" indicates the rear direction (rear side). The "up-down direction" means the direction of an arrow U and the direction of an arrow D. The "left-right direction" means the direction of an arrow LH and the direction of an arrow RH. The "front-rear direction" means the direction of an arrow F and the direction of an arrow R.

### [Outline of Flow Path Switching Valve]

In Fig. 1, a flow path switching valve 10 is configured to be capable of supplying a fluid to at least two elements that use the fluid as a heat medium. As the elements, for example, three elements of a first element, a second element, and a third element are used (not illustrated).

The flow path switching valve 10 has a parallel mode in which the fluid is individually supplied to each element, and a series mode in which the fluid is supplied to the at least two elements in series. The parallel mode and the series mode each have, for example, a mode A in which the fluid is supplied to three elements, and a mode B in which the fluid is supplied to two elements.

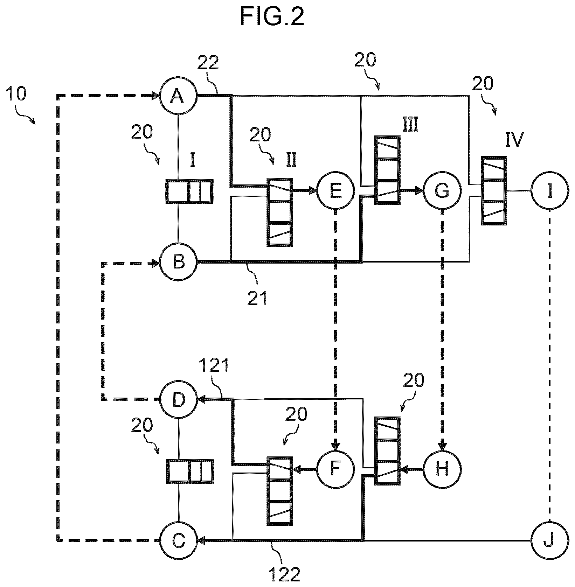

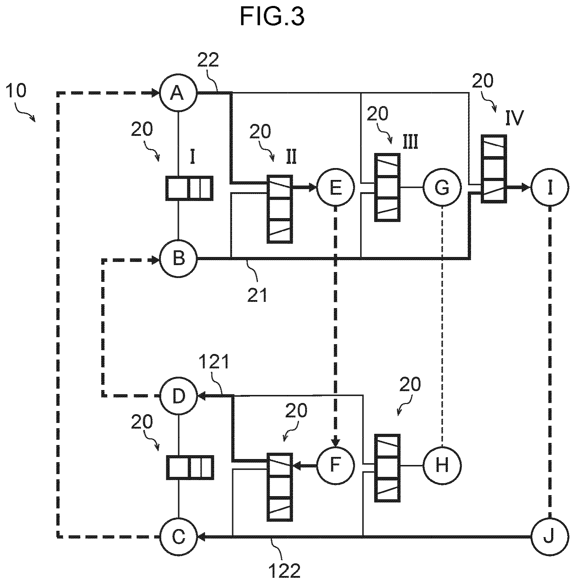

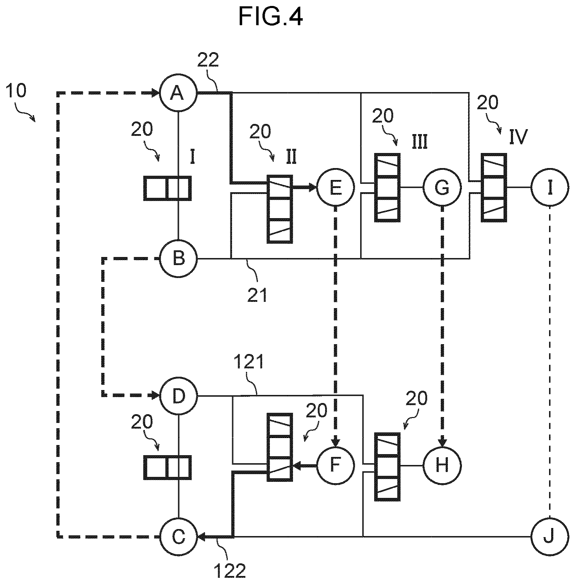

Fig. 1 illustrates the parallel mode and the mode A, and this pattern is referred to as pattern 1. Fig. 2 illustrates the series mode and the mode A, and this pattern is referred to as pattern 2. Fig. 3 illustrates the series mode and the mode B, and this pattern is referred to as pattern 3. Fig. 4 illustrates the parallel mode and the mode B, and this pattern is referred to as pattern 4.

That is, the flow path switching valve 10 in the present embodiment has the switching modes of the patterns 1 to 4. The specific configuration of the flow path switching valve 10 is not limited to a specific configuration as long as such switching modes can be realized. Next, an example of the specific configuration of the flow path switching valve 10 will be described.

### [Example of Specific Configuration of Flow Path Switching Valve]

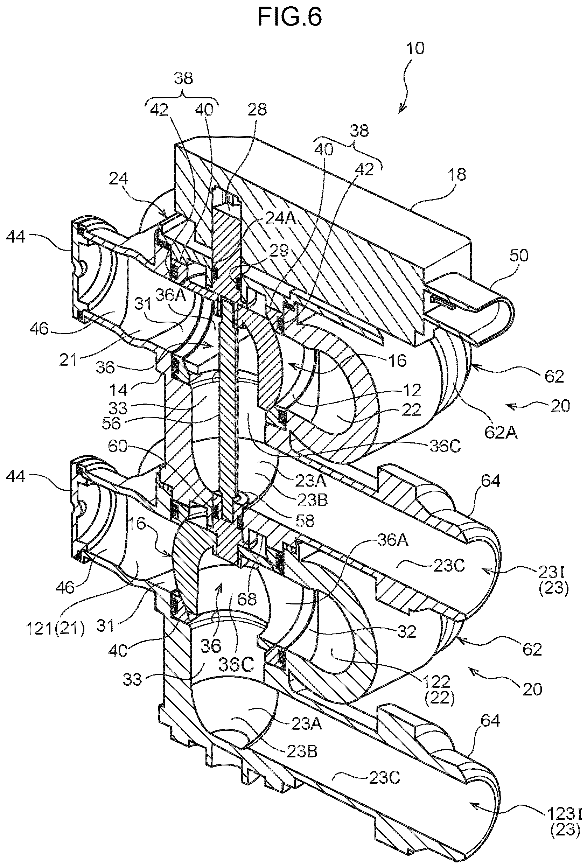

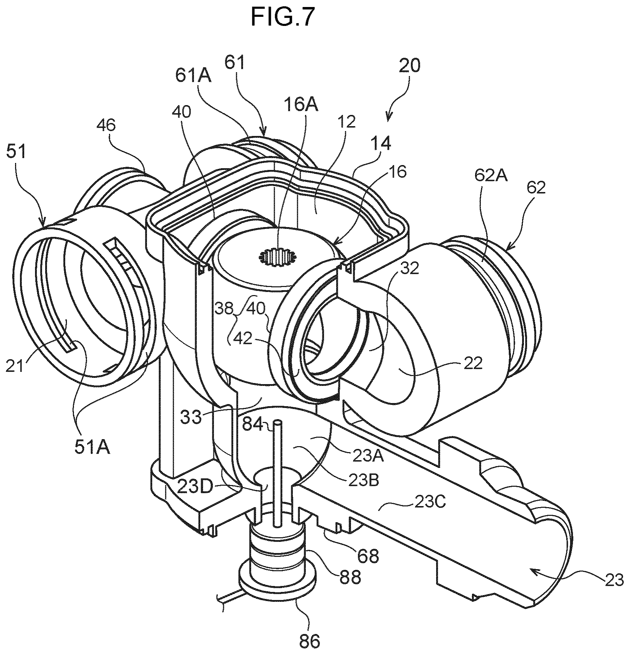

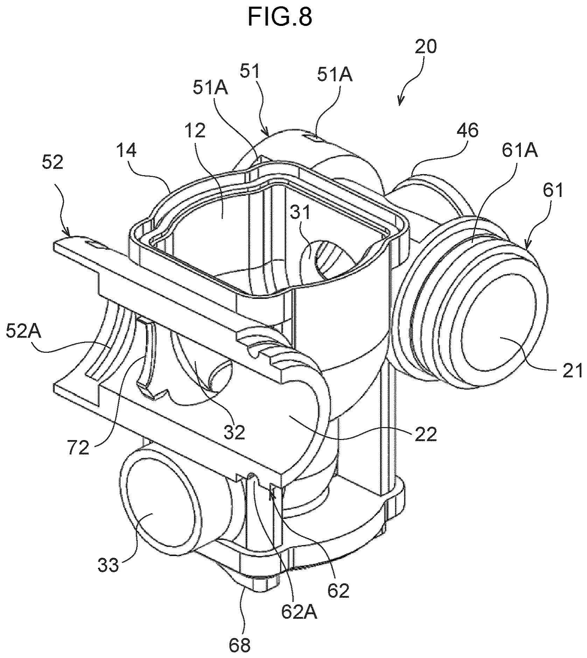

Fig. 1 is a perspective view illustrating an overall configuration of a flow path switching valve 10 according to an embodiment of the invention. In the flow path switching valve 10, three valve units 20 are connected in the left-right direction, and each valve unit 20 overlaps another valve unit 20 on the lower side of the valve unit 20. That is, six valve units 20 are combined. Fig. 6 is a partially broken perspective view illustrating a flow path switching valve in which two valve units 20 overlap each other and two valve elements are rotated by one rotation drive unit. Fig. 6 corresponds to a view of two upper and lower valve units 20 extracted from Fig. 1. Figs. 7 and 8 are partially broken perspective views illustrating one valve unit 20.

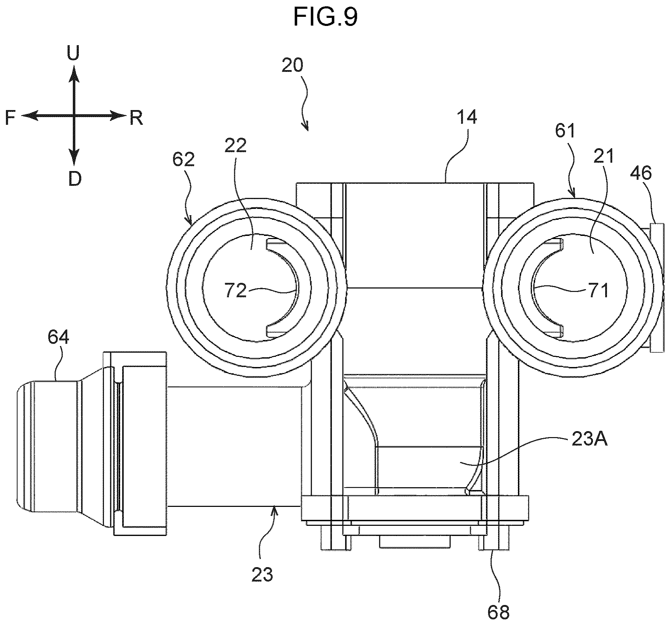

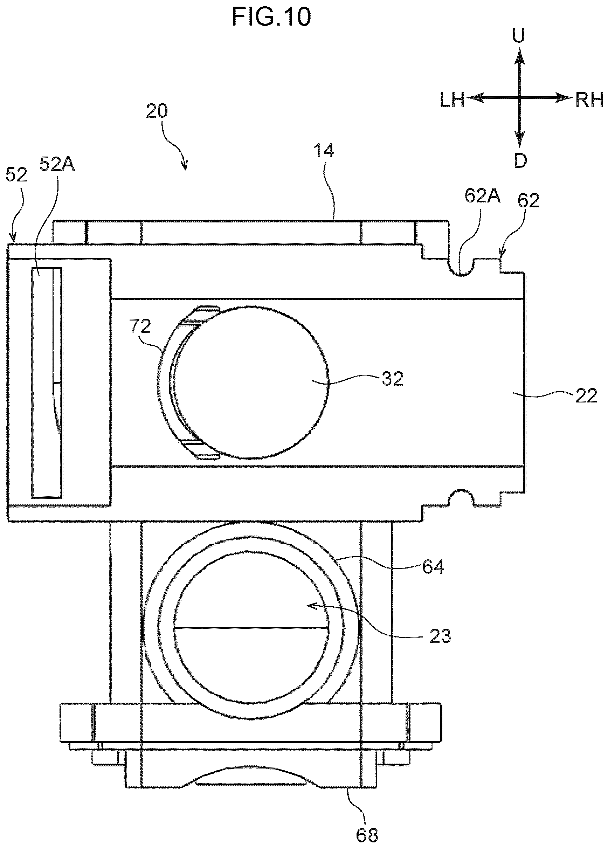

The flow path switching valve 10 is used as, for example, a rotary three-way valve (Fig. 7) or a rotary four-way valve that switches a flow path of a fluid flowing in an engine room or the like of an automobile. As shown in Figs. 6 to 10, the flow path switching valve 10 includes a valve unit 20 and a rotation drive unit 18.

### [Valve Unit]

The valve unit 20 includes a valve body 14, a valve element 16, a first flow path 21, a second flow path 22, and a third flow path 23. In the example shown in Fig. 7, the valve unit 20 is, for example, a three-way valve that switches a state in which the first flow path 21 and the third flow path 23 communicate with each other, a state in which the second flow path 22 and the third flow path 23 communicate with each other, and a state in which the first flow path 21, the second flow path 22, and the third flow path 23 do not communicate with each other.

### (Valve Body)

In Fig. 8, the valve body 14 is made of, for example, a synthetic resin, and includes a valve chest 12 formed inside the valve body 14. The valve chest 12 is opened upward, and a valve element 16 and a sealing portion 38 described below are inserted from the upper direction. On the wall surface forming the valve chest 12, for example, a first inlet/outlet opening 31 and a second inlet/outlet opening 32 are formed that face each other and through each of which a fluid enters or exits. In an example, the first inlet/outlet opening 31 is formed on the rear wall surface of the valve chest 12, and the second inlet/outlet opening 32 is formed on the front wall surface of the valve chest 12. That is, the first inlet/outlet opening 31 and the second inlet/outlet opening 32 face each other in the front-rear direction of the valve chest 12. Furthermore, a third inlet/outlet opening 33 is formed on the bottom surface of the valve chest 12.

### (Valve Element)

In Figs. 6, 7, 11, and 12, the valve element 16 is a ball-shaped member made of, for example, a synthetic resin, and is rotatably disposed in the valve chest 12. In an upper portion of the valve element 16, an insertion hole 16A is formed into which a valve shaft 28 of the rotation drive unit 18 is inserted. The valve shaft 28 and the insertion hole 16A are engaged with each other around the axial direction of the valve shaft 28 to transmit rotation of the valve shaft 28 to the valve element 16. The insertion hole 16A penetrates, for example, to a flow path 36 of the valve element 16.

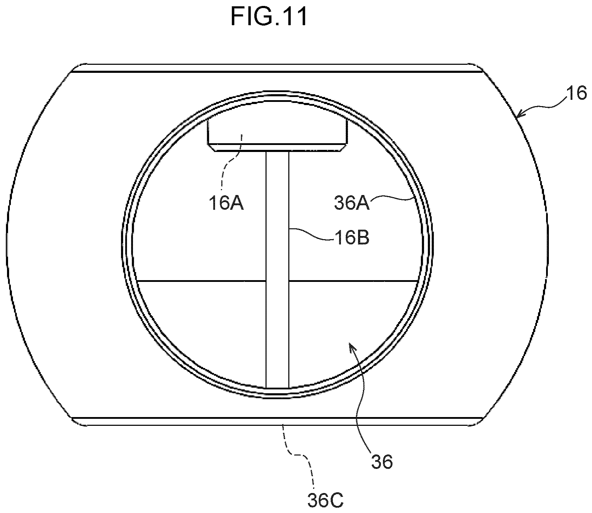

The flow path (internal flow path) 36 is provided inside the valve element 16 in order to make the first inlet/outlet opening 31, the second inlet/outlet opening 32, and the third inlet/outlet opening 33 of the valve body 14 communicate selectively, in other words, in order to switch the communicated states of the first inlet/outlet opening 31, the second inlet/outlet opening 32, and the third inlet/outlet opening 33 selectively. Specifically, as shown in Fig. 11, in the valve element 16, a lateral hole 36A is formed that leads from the outer periphery (side portion) of the valve element 16 to the flow path 36. Furthermore, in the valve element 16, a lower hole 36C is formed that leads from the outer periphery (lower portion) of the valve element 16 to the flow path 36. The flow path 36 communicates from the lateral hole 36A to the lower hole 36C. The lateral hole 36A can face the first inlet/outlet opening 31 or the second inlet/outlet opening 32 according to the state of the valve element 16. In any of the inlet/outlet openings, in a state in which the lateral hole 36A does not face the inlet/outlet opening, the valve element 16 is closed in close contact with a sheet member 40 described below.

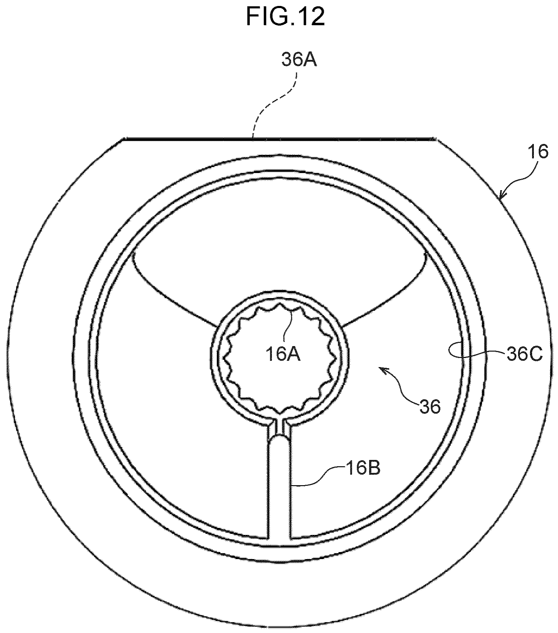

As shown in Figs. 11 and 12, a rib 16B extending in the direction toward the third inlet/outlet opening 33 (up-down direction) is formed in the flow path 36 of the valve element 16. The rib 16B is, for example, a thin plate-shaped protrusion, and is formed, for example, on the inner wall in the inner side of the lateral hole 36A in the flow path 36 of the valve element 16.

The configuration of the lateral hole 36A corresponds to II, III, and IV of the valve units 20 in Fig. 1. The shape of the flow path 36 in the valve element 16 is not limited to the above configuration. For example, lateral holes may be provided in two directions at an included angle of 90° in plan view. Alternatively, a lateral hole may be provided on a straight line in a diametrical direction of the valve element 16 in plan view (see I of the valve unit 20 in Fig. 1).

In Figs. 6 and 7, a sealing portion 38 is provided for sealing between the valve element 16 and each of the first inlet/outlet opening 31 and the second inlet/outlet opening 32. The sealing portion 38 includes, for example, a sheet member 40 and an O-ring 42. The sheet member 40 is made of, for example, a synthetic resin, and is formed into an annular shape having an opening corresponding to the first inlet/outlet opening 31 or the second inlet/outlet opening 32. The sheet member 40 is disposed around each of the first inlet/outlet opening 31 and the second inlet/outlet opening 32 on the inner wall surface (front and rear wall surfaces of the valve chest 12) of the valve body 14. The valve element 16 is sandwiched between the two sheet members 40, and is rotatably and slidably disposed in contact with each of the sheet members 40.

The space between the sheet member 40 and the valve body 14 is sealed by the O-ring 42, for example, airtightly and watertightly. The O-ring 42 is attached to, for example, an O-ring groove (not illustrated) formed in the sheet member 40.

In an example, polyphenylene sulfide (PPS) can be used in the valve body 14 and the valve element 16, fluororesin (PTFE) can be used in the sheet member 40, and synthetic rubber can be used in the O-ring 42.

### (Rotation Drive Unit)

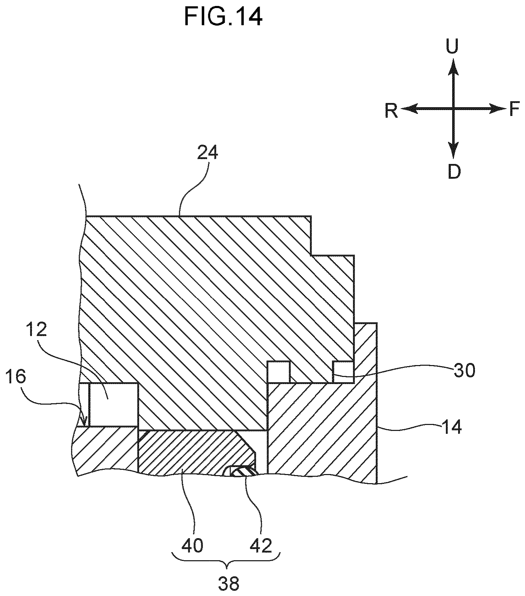

In Fig. 6, the rotation drive unit 18 is a device that is connected to the valve unit 20 and that rotates the valve element 16 such that a communicated state among the first inlet/outlet opening 31, the second inlet/outlet opening 32, and the third inlet/outlet opening 33 is selectively switched through the flow path of the valve element 16. The rotation drive unit 18 is disposed above the valve body 14 in the upper valve unit 20. Specifically, for example, a bracket 24 is fixed onto the upper valve body 14, and the rotation drive unit 18 is fixed onto the bracket 24 using, for example, a screw 26 (Fig. 1). An upward opening (Fig. 7) in the valve chest 12 of the upper valve body 14 is closed by, for example, the bracket 24 (Fig. 14). In other words, the bracket 24 has a shape that closes the opening of the valve chest 12. The bracket 24 is welded, in a state of being inlay fitted, to the inside of the opening of the valve chest 12. The bracket 24 is provided with a protrusion 30. The protrusion 30 faces or abuts the edge of the valve chest 12 in the valve body 14. The protrusion 30 may be a melting margin. The protrusion 30 may be provided not on the bracket 24 but on the valve body 14.

The rotation drive unit 18 is, for example, a geared motor. The rotation drive unit 18 is provided with, for example, a connector 50 to which wiring for communication with a control unit and for power supply is connected. The valve shaft 28 as an output shaft is coupled to the rotation drive unit 18. The valve shaft 28 is inserted through a through hole 24A formed in the bracket 24. An O-ring 29 is attached to the valve shaft 28. The O-ring 29 ensures watertightness between the valve shaft 28 and the through hole 24A. The lower end of the valve shaft 28 is inserted into the insertion hole 16A of the valve element 16 (Fig. 7).

### (First Flow Path, Second Flow Path, and Third Flow Path)

In Figs. 6 to 8, the first flow path 21, the second flow path 22, and the third flow path 23 are, for example, pipes formed integrally with the valve body 14. The first flow path 21, the second flow path 22, and the third flow path 23 can be referred to as the first port, the second port, and the third port, respectively.

The first flow path 21 is, for example, opened at both ends, and that communicates with the first inlet/outlet opening 31 of the valve chest 12. The first flow path 21 extends, for example, linearly in the left-right direction. The first inlet/outlet opening 31 is connected to the middle of the first flow path 21. Thus, the first flow path 21 and the first inlet/outlet opening 31 are formed into a substantially T shape in plan view.

The second flow path 22 is provided in parallel with the first flow path 21 with the valve body 14 interposed between the first flow path 21 and the second flow path 22, and, for example, opened at both ends, and that communicates with the second inlet/outlet opening 32. The second flow path 22 extends, for example, linearly in the left-right direction. The second inlet/outlet opening 32 is connected to the middle of the second flow path 22. Thus, the second flow path 22 and the second inlet/outlet opening 32 are formed into a substantially T shape in plan view.

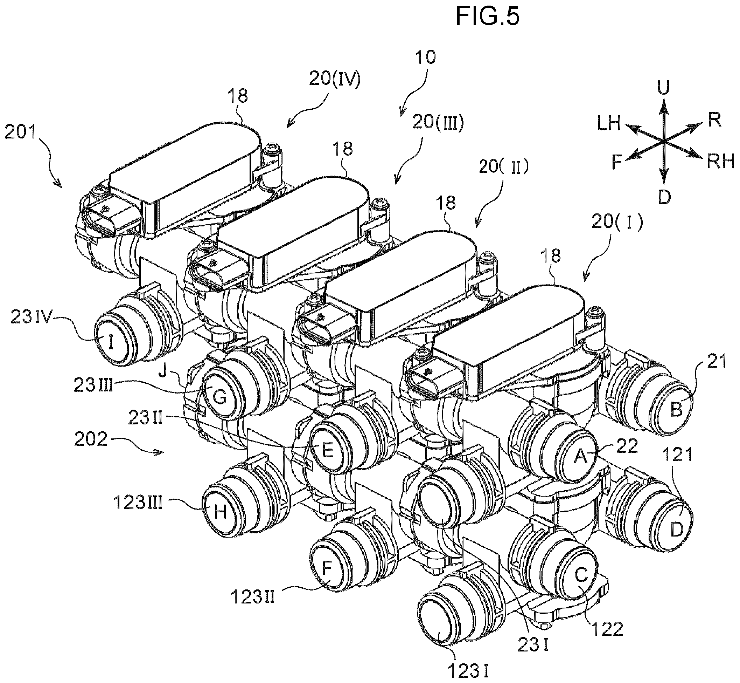

As shown in Figs. 7 and 8, the first flow path 21 and the second flow path 22 have one end provided with female joints 51 and 52, respectively. The first flow path 21 and the second flow path 22 have the other end provided with male joints 61 and 62, respectively. The male joints 61 and 62 are formed to be connectable to the female joints 51 and 52, respectively. Annular grooves 61A and 62A are formed on the outer peripheries of the male joints 61 and 62, respectively. In the female joints 51 and 52, for example, a pair of arc-shaped slits 51A and a pair of arc-shaped slits 52A are formed, respectively. The male joints 61 and 62 are fitted into the female joints 51 and 52, respectively, and clips 34 are fitted into the grooves 61A and 62A through the slits 51A and 52A, respectively, to form a structure in which disconnection of joints is prevented. The water stop at each connection portion of joints is achieved using, for example, an O-ring 66. With such a joint structure, the first flow path 21 and the second flow path 22 of one valve unit 20 can be connected with the first flow path 21 and the second flow path 22 of another valve unit 20, respectively (see Fig. 5). Note that this joint structure is an example, and any other joint structure can be used.

In Figs. 8 to 10, a first protruding portion 71 protruding from the first inlet/outlet opening 31 side toward the inside of the first flow path 21 is provided at a connection portion of the first flow path 21 with the first inlet/outlet opening 31. The first protruding portion 71 is, for example, an arc-shaped protrusion formed, on the first flow path 21, along the opening of the first inlet/outlet opening 31. The range of the first protruding portion 71 is, for example, less than half the circumference of the inner peripheral surface of the first flow path 21 in the first inlet/outlet opening 31 side. One surface of the first protruding portion 71 in the left-right direction is a recess surface obtained by extending a part of the inner wall of the first flow path 21. In the illustrated example, the first protruding portion 71 is provided on the left side of the first inlet/outlet opening 31. The first protruding portion 71 may be provided on the right side of the first inlet/outlet opening 31, or may be provided on both left and right sides of the first protruding portion 71.

Furthermore, a second protruding portion 72 protruding from the second inlet/outlet opening 32 side toward the inside of the second flow path 22 is provided at a connection portion of the second flow path 22 with the second inlet/outlet opening 32. The second protruding portion 72 is, for example, an arc-shaped protrusion formed, on the second flow path 22, along the opening of the second inlet/outlet opening 32. The range of the second protruding portion 72 is, for example, less than half the circumference of the inner peripheral surface of the second flow path 22 in the second inlet/outlet opening 32 side. One surface of the second protruding portion 72 in the left-right direction is a recess surface obtained by extending a part of the inner wall of the second flow path 22. In the illustrated example, the second protruding portion 72 is provided on the left side of the second inlet/outlet opening 32. The second protruding portion 72 may be provided on the right side of the second inlet/outlet opening 32, or may be provided on both left and right sides of the second protruding portion 72.

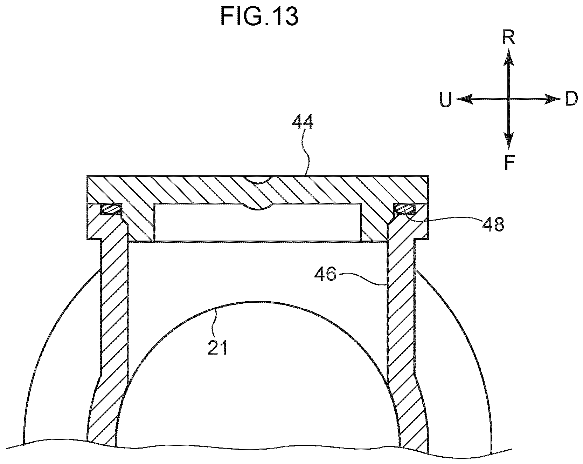

As shown in Figs. 1, 5, 6, and 13, a sub flow path 46 closed by a lid body 44 may be provided at, for example, a position facing the first inlet/outlet opening 31 in the first flow path 21. Water is shut out of the space between the lid body 44 and the end of the sub flow path 46 by welding or with a sealing member such as an O-ring 48. The sub flow path 46 can also be used when the lid body 44 is removed. To the sub flow path 46, for example, a storage tank can be connected. In a case in which the valve units 20 overlap each other in the up-down direction, two upper and lower sub flow paths 46 are present. The two sub flow paths 46 can also be connected to a storage tank provided with two connection ports. In this case, the storage tank may have two storage chambers including the two connection ports respectively and partitioned from each other. Thus, the same kind of fluids having different temperatures can be separately stored.

Pumps can be attached to the female joint 51 or the male joint 61 of the terminal first flow path 21 and the female joint 52 or the male joint 62 of the terminal second flow path 22, respectively, in the flow path switching valve 10. A pump may be attached to the female joint 51 of the first flow path 21 in the upper valve unit 20. A pump may be attached to the female joint 52 of the second flow path 22 in the upper valve unit 20. The pump has a joint serving as a fluid inlet and outlet port. The pump can supply a fluid from another apparatus to the first flow path 21, and can supply a fluid in the first flow path 21 to another apparatus, via the joint. The pump can supply a fluid from another apparatus to the second flow path 22, and can supply a fluid in the second flow path 22 to another apparatus, via the joint.

In Figs. 6, 7, and 9, the third flow path 23 communicates with the third inlet/outlet opening 33, and is opened at an opposite side from the third inlet/outlet opening 33. Specifically, the third flow path 23 has a bent portion 23A. The third inlet/outlet opening 33 is positioned above the bent portion 23A. The end of the third flow path 23 on the opening side is positioned, for example, in front of the bent portion 23A, and protrudes, for example, forward of the second flow path 22. The end of the third flow path 23 on the opening side is provided with, for example, a male joint 64 connectable to a pipe to another apparatus.

As shown in Figs. 6 and 7, a portion facing the third inlet/outlet opening 33 in the bent portion 23A of the third flow path 23, that is, a portion below the third inlet/outlet opening 33 is provided with, for example, a spherical recess 23B. The recess 23B is formed into a substantially hemispherical shape. The recess 23B is recessed downward of the bottom 23C of the lateral flow path in front of the bent portion 23A. Thus, a part of a fluid entering the third flow path 23 from the third inlet/outlet opening 33 once falls into the recess 23B and then enters the lateral flow path of the third flow path 23.

In the example illustrated in Fig. 7, a through hole 23D is formed at the bottom of the recess 23B. A valve shaft 58 can pass through the through hole 23D (Fig. 6). Water is shut out of the space between the valve shaft 58 and the through hole 23D with an O-ring 60. In a case in which there is no valve unit overlapping below, for example, a structure without the through hole 23D at the bottom of the recess 23B is adopted as in the lower valve unit 20 in Fig. 6. A configuration may be adopted in which the through hole 23D is provided but closed by another member (for example, a closing portion 86). For example, the closing portion 86 may include a temperature sensor 84. The temperature sensor 84 is, for example, supported by the closing portion 86, and disposed so that the distal end is positioned in the third flow path 23. For example, an O-ring 88 is attached to the closing portion 86. The O-ring 88 ensures watertightness between the closing portion 86 and the through hole 23D. Using the temperature sensor 84 enables accurate measurement of the temperature in the third flow path 23.

### [Overlapping of Valve Units]

In Figs. 1 and 6, in the embodiment, to one valve unit 20, another valve unit 20 can be connected so as to overlap with the one valve unit 20 on the opposite side from the rotation drive unit 18. In the upper valve unit 20, a portion overlapping the lower valve unit 20 is a lid 68 that closes the valve chest 12 of the lower valve unit 20. This closing structure is substantially the same as the closing structure of the valve chest 12 by the bracket 24 in Fig. 14, and the bottom of the upper valve body 14 is welded, in a state of being inlay fitted, to the inside of the opening of the valve chest 12 in the lower valve body 14.

As shown in Fig. 6, a structure may be adopted in which another valve unit 20 is connected to one valve unit 20 so as to overlap with the one valve unit 20 and two valve elements 16 in the two valve units 20 are rotated by one rotation drive unit 18. In this example, the valve shaft 28 of the upper valve unit 20 and the valve shaft 58 of the lower valve unit 20 are connected by a connecting shaft 56. The connecting shaft 56 connects the upper and the lower valve shafts 28 and 58 through the inside of the upper valve element 16 and the vertical flow path of the third flow path 23. When the upper valve shaft 28 is rotationally driven by the rotation drive unit 18, the rotation is transmitted to the lower valve shaft 58 via the connecting shaft 56, and the upper and the lower valve elements 16 rotate in synchronization.

The upper and the lower valve units 20 may be each provided with a rotation drive unit 18 to perform rotation control of the valve element 16 separately.

### [Valve Unit Group]

In Fig. 5, the first flow path 21 and the second flow path 22 of the valve unit 20 is connected with the first flow path 121 and the second flow path 22 of another valve unit 20, respectively, to configure a first valve unit group 201 in which four valve units 20 are connected in series. In addition to the first valve unit group 201, a second valve unit group 202 is configured in which three valve units 20 are connected in series. The valve units 20 are referred to as "valve unit 20 (I)", "valve unit 20 (II)", "valve unit 20 (III)", and "valve unit 20 (IV)", in order from the right.

### [Overlapping of Valve Unit Groups]

In Fig. 5, the second valve unit group 202 is connected to the first valve unit group 201 so as to overlap with the first valve unit group 201 in the direction of the rotation axis of the valve element 16 (specifically, the axis direction of the valve shaft 28) in the first valve unit group 201. The overlapping of the valve units 20 is as described above.

The rotation drive unit 18 is connected to the valve unit 20 in the first valve unit group 201 and that rotates two valve elements 16 overlapping in the direction of the rotation axis (the axis direction of the valve shaft 28) in conjunction, such that a communicated state among the first inlet/outlet opening 31, the second inlet/outlet opening 32, and the third inlet/outlet opening 33 is selectively switched through the flow path of the valve element 16. The rotation drive unit 18 is provided in each of the four valve units 20 in the first valve unit group 201.

The right end of the second flow path 22 is referred to as "port A", and the right end of the first flow path 21 is referred to as "port B". The right end of the second flow path 122 is referred to as "port C", and the right end of the first flow path 121 is referred to as "port D". The left end of the second flow path 122 is referred to as "port J".

The third flow paths are referred to as third flow paths 23I, 23II, 23III, and 23IV in order from the right of the first valve unit group 201, and third flow paths 123I, 123II, and 123III in order from the right of the second valve unit group 202. The third flow paths 23II, 23III, and 23IV are referred to as ports E, G, and I, respectively. The third flow paths 123II and 123III are referred to as ports F and H, respectively.

Each of the opening portions of the flow paths other than the ports A to J can be closed and used.

### (Operation)

The embodiment is configured as described above, and its operation will be described below. In Fig. 6, in the flow path switching valve 10 according to the embodiment, a communicated state among the first inlet/outlet opening 31, the second inlet/outlet opening 32, and the third inlet/outlet opening 33 of the valve chest 12 can be selectively switched through the flow path 36 of the valve element 16 by rotating the valve element 16 by the rotation drive unit 18. The first inlet/outlet opening 31 and the second inlet/outlet opening 32 face each other with the valve chest 12 interposed therebetween, and one lateral hole 36A is formed in the valve element 16, and therefore the flow path can be switched by rotating the valve element 16 by 180°.

The first flow path 21 and the second flow path 22 of one valve unit 20 can be connected with the first flow path 21 and the second flow path 22 of another valve unit 20, respectively, and thus combination of the valve units 20 can easily realize flow path switching valves of various specifications. Specifically, the first flow path 21 and the second flow path 22 have one end provided with the female joints 51 and 52, respectively, and the first flow path 21 and the second flow path 22 have the other end provided with the male joints 61 and 62, respectively. The male joints 61 and 62 can be connected to the female joints 51 and 52, respectively. Therefore, for example, the first flow paths 21 can be easily connected to each other, and the second flow paths 22 can be easily connected to each other, in one valve unit 20 and the other valve unit 20.

A fluid flowing from the valve chest 12 through the third inlet/outlet opening 33 into the third flow path 23 passes through the bent portion 23A. In a case in which the portion facing the third inlet/outlet opening 33 in the bent portion 23A of the third flow path 23 is provided with the spherical recess 23B, the resistance of the fluid is smaller than in a configuration in which the portion has no recess 23B and is simply bent. Therefore, the pressure loss in the third flow path 23 can be suppressed.

As shown in Figs. 11 and 12, in a case in which the rib 16B extending in the direction toward the third inlet/outlet opening 33 is formed in the flow path 36 of the valve element 16, a fluid flowing in the valve element 16 can be straightened. At the time of mounting the valve element 16 in the valve chest 12, the direction of the valve element 16 can be easily adjusted by applying a force to the rib 16B.

As shown in Figs. 8 to 10, in a case in which the first protruding portion 71 is provided at the connection portion of the first flow path 21 with the first inlet/outlet opening 31 of the valve chest 12, the first protruding portion 71 disturbs the flow of a fluid in the first flow path 21. Thus, the fluid flowing through the first flow path 21 can be guided to the first inlet/outlet opening 31. In a case in which the second protruding portion 72 is provided at the connection portion of the second flow path 22 with the second inlet/outlet opening 32 of the valve chest 12, the second protruding portion 72 disturbs the flow of a fluid in the second flow path 22, and thus the fluid flowing through the second flow path 22 can be guided to the second inlet/outlet opening 32. Thus, the inflow of a fluid can be promoted from the first flow path 21 and the second flow path 22 to the valve chest 12.

As shown in Figs. 1 and 6, the degree of freedom in combination of the valve units 20 can be enhanced by enabling one valve unit 20 to be connectable to another valve unit 20 overlapping the one valve unit 20 on the opposite side from the rotation drive unit 18.

In a case in which in one valve unit 20, a portion overlapping another valve unit 20 is the lid 68 that closes the valve chest 12 of another valve unit 20, another part is unnecessary for closing the valve chest 12 of another valve unit 20 at the time of setting the one valve unit 20 and another valve unit 20 to overlap each other. Therefore, an increase in the number of parts can be suppressed, and the workability can be enhanced at the time of connecting the valve units 20 so as to overlap each other.

In a case in which two valve elements 16 in overlapping two valve units 20 are rotated by one rotation drive unit 18, the number of parts and the cost can be reduced as compared with a case in which two valve units 20 are each provided with a rotation drive unit 18.

As described above, according to the embodiment, flow path switching valves of various specifications can be easily realized.

In the embodiment, a fluid can be supplied to at least two elements that use the fluid as a heat medium, and there are the parallel mode in which the fluid is individually supplied to each of the at least two elements and the series mode in which the fluid is supplied to the at least two elements in series, and thus it is possible to set a plurality of modes of supplying a fluid to a plurality of elements. Furthermore, there are the mode A in which the fluid is supplied to three elements and the mode B in which the fluid is supplied to two elements, and thus it is possible to set further many modes of supplying a fluid to a plurality of elements that use the fluid as a heat medium.

Fig. 1 illustrates a state in which the switching mode is the mode A of the parallel mode (pattern 1). Fig. 2 illustrates a state in which the switching mode is the mode A of the series mode (pattern 2). Fig. 3 illustrates a state in which the switching mode is the mode B of the series mode (pattern 3). Fig. 4 illustrates a state in which the switching mode is the mode B of the parallel mode (pattern 4).

### (Pattern 1)

In the pattern 1 illustrated in Fig. 1, the port A communicates with the ports B, G, and E, and the port C communicates with the ports D, H, and F. At this time, in the case of forming a flow path connecting the ports B and D, a flow path connecting the ports E and F, and a flow path connecting the ports G and H, a parallel flow path (parallel circuit) can be configured in which a fluid input to the port A branches into three flow paths of the ports B, G, and E, passes through each of the ports D, H, and F, and returns to the port C. In a case in which an element is disposed in each of the three connecting flow paths, the mode A (mode of supplying a fluid to three elements) of the parallel mode can be configured.

In the pattern 1, in the upper valve unit 20 (I), the ports A and B communicate with each other, in the upper valve unit 20 (II), the ports A and E communicate with each other, in the upper valve unit 20 (III), the ports A and G communicate with each other, and in the upper valve unit 20 (IV), the ports A, B, and I are disconnected. In the lower valve unit 20 (I), the ports C and D communicate with each other, in the lower valve unit 20 (II), the ports C and F communicate with each other, and in the lower valve unit 20 (III), the ports C and H communicate with each other.

The ports C and J are both ends of the second flow path 122 and always communicate with each other.

### (Pattern 2)

In the pattern 2 illustrated in Fig. 2, in each pair of the ports A and E, the ports B and G, the ports H and C, and the ports F and D, the two ports communicate with each other. At this time, in the case of forming a flow path connecting the ports B and D, a flow path connecting the ports E and F, and a flow path connecting the ports G and H, a series flow path (series circuit) can be configured in which a fluid input to the port A passes through the ports E, F, D, B, G, and H and returns to the port C. That is, in a case in which an element is disposed in each of the three connecting flow paths, the mode A of the series mode can be configured.

In the pattern 2, in the upper valve unit 20 (I), the ports A and B are disconnected, in the upper valve unit 20 (II), the ports A and E communicate with each other, in the upper valve unit 20 (III), the ports B and G communicate with each other, and in the upper valve unit 20 (IV), the ports A, B, and I are disconnected. In the lower valve unit 20 (I), the ports C and D are disconnected, in the lower valve unit 20 (II), the ports D and F communicate with each other, and in the lower valve unit 20 (III), the ports C and H communicate with each other. The ports C and J are both ends of the second flow path 122 and always communicate with each other.

### (Pattern 3)

In the pattern 3 illustrated in Fig. 3, in each pair of the ports A and E, the ports B and I, and the ports F and D, the two ports communicate with each other. The ports J and C communicate with each other because there is no valve element between them. At this time, in the case of forming a flow path connecting the ports B and D, a flow path connecting the ports E and F, and a flow path connecting the ports I and J, a series flow path (series circuit) can be configured in which a fluid input to the port A passes through the ports E, F, D, B, I, and J and returns to the port C. In a case in which an element is disposed in each of two flow paths of the three connecting flow paths, the mode B (mode of supplying a fluid to two elements) of the series mode can be configured.

In the pattern 3, in the upper valve unit 20 (I), the ports A and B are disconnected, in the upper valve unit 20 (II), the ports A and E communicate with each other, in the upper valve unit 20 (III), the ports A, B, and G are disconnected, and in the upper valve unit 20 (IV), the ports B and I communicate with each other. In the lower valve unit 20 (I), the ports C and D are disconnected, in the lower valve unit 20 (II), the ports D and F communicate with each other, and in the lower valve unit 20 (III), the ports C, D, and H are disconnected.

The ports C and J are both ends of the second flow path 122 and always communicate with each other.

### (Pattern 4)

In the pattern 4 illustrated in Fig. 4, the port A communicates with the ports B and E, and the port C communicates with the ports D and F. At this time, in the case of forming a flow path connecting the ports B and D and a flow path connecting the ports E and F, a parallel flow path (parallel circuit) can be configured in which a fluid input to the port A branches into two flow paths of the ports B and E, passes through each of the ports D and F, and returns to the port C. In a case in which an element is disposed in each of two flow paths of the three connecting flow paths, the mode B of the parallel mode can be configured.

In the pattern 4, in the upper valve unit 20 (I), the ports A and B communicate with each other, in the upper valve unit 20 (II), the ports A and E communicate with each other, in the upper valve unit 20 (III), the ports A, B, and G are disconnected, and in the upper valve unit 20 (IV), the ports A, B, and I are disconnected. In the lower valve unit 20 (I), the ports C and D communicate with each other, in the lower valve unit 20 (II), the ports C and F communicate with each other, and in the lower valve unit 20 (III), the ports C, D, and H are disconnected. The ports C and J are both ends of the second flow path 122 and always communicate with each other.

In the embodiment, the first valve unit group 201 is configured in which four valve units 20 are connected in series, and in addition to the first valve unit group 201, the second valve unit group 202 is configured in which three valve units 20 are connected in series. The second valve unit group 202 is connected to the first valve unit group 201 so as to overlap with the first valve unit group 201 in the direction of the rotation axis of the valve element 16 in the first valve unit group 201. The rotation drive unit 18 can selectively switch a communicated state among the first inlet/outlet opening 31, the second inlet/outlet opening 32, and the third inlet/outlet opening 33 of the valve chest 12 in each valve unit 20 through the flow path 36 of the valve element 16 by rotating two valve elements 16 overlapping in the direction of the rotation axis of the valve element 16 in conjunction.

Connecting the valve units 20 vertically and horizontally in this manner can make the flow path switching valve 10 compact. According to the embodiment, a configuration can be adopted that does not need a manifold pipe (separately prepared collective pipe).

### [Other Embodiments]

Although an example of the embodiment of the invention is described above, the embodiment of the invention is not limited to the above, and it is a matter of course that various modifications can be made in addition to the above without departing from the gist of the invention.

It is adopted that the first flow path 21 and the second flow path 22 have one end provided with the female joints 51 and 52, respectively, and the first flow path 21 and the second flow path 22 have the other end provided with the male joints 61 and 62 connectable to the female joints 51 and 52, respectively, but a configuration may be adopted in which such a joint structure is not included.

It is adopted that the bent portion 23A of the third flow path 23 is provided with the recess 23B, but a configuration may be adopted in which such a recess 23B is not provided. It is adopted that the rib 16B is formed in the flow path 36 of the valve element 16, but a configuration without such a rib 16B may be adopted.

It is adopted that the first protruding portion 71 is provided at the connection portion of the first flow path 21 with the first inlet/outlet opening 31 and the second protruding portion 72 is provided at the connection portion of the second flow path 22 with the second inlet/outlet opening 32, but it may be adopted that the first protruding portion 71 or the second protruding portion 72 is provided, and it may be adopted that the first protruding portion 71 and the second protruding portion 72 are not provided.

It is adopted that to one valve unit 20, another valve unit 20 can be connected to overlap with the one valve unit 20 on the opposite side from the rotation drive unit 18, but it may be adopted that another member is interposed between the two valve units 20. Such connection need not be possible.

In the flow path switching valve, a configuration is adopted in which the valve units 20 overlap each other in two stages, but the valve units 20 may overlap each other in three or more stages.

As the switching mode, the mode A is adopted in which a fluid is supplied to three elements, and a mode is adopted in which a fluid is supplied to two elements, but the switching mode is not limited thereto, and a mode may be adopted in which a fluid is supplied to four or more elements.

The disclosure of Japanese Patent Application No. 2023-60976 filed on April 4, 2023 is incorporated herein by reference in its entirety.

All documents, patent applications, and technical standards described herein are incorporated herein by reference to the same extent as in a case in which each document, patent application, and technical standard are specifically and individually stated to be incorporated herein by reference.

## Claims

1. A flow path switching valve configured to supply a fluid to at least two elements that use the fluid as a heat medium,
the flow path switching valve having: a parallel mode in which the fluid is individually supplied to the elements; and a series mode in which the fluid is supplied to the at least two elements in series.

2. The flow path switching valve according to claim 1, wherein the at least two elements includes three elements , and
the parallel mode and the series mode each have: a mode A in which the fluid is supplied to the three elements; and a mode B in which the fluid is supplied to two of the three elements.

3. The flow path switching valve according to claim 1 or 2, comprising a valve unit including: a valve body that includes a valve chest formed inside the valve body, and includes a first inlet/outlet opening, a second inlet/outlet opening, and a third inlet/outlet opening that are formed on a wall surface forming the valve chest, and the fluid entering or exiting through each of the first inlet/outlet opening, the second inlet/outlet opening, and the third inlet/outlet opening; a valve element that is rotatably disposed in the valve chest and at which a flow path is formed; a first flow path that communicates with the first inlet/outlet opening; a second flow path that is provided in parallel with the first flow path with the valve body interposed between the first flow path and the second flow path and that communicates with the second inlet/outlet opening; and a third flow path that communicates with the third inlet/outlet opening and has an opening at an opposite side from the third inlet/outlet opening, wherein:
the first flow path and the second flow path of other valve units are connected to the first flow path and the second flow path of the valve unit, to configure a first valve unit group in which four of the valve units are connected in series,
a second valve unit group, in which three of the valve units are connected in series, is configured in addition to the first valve unit group,
the second valve unit group is connected to the first valve unit group so as to overlap with the first valve unit group in a direction of a rotation axis of the valve element in the first valve unit group, and
the flow path switching valve further comprises a rotation drive unit that is connected to the valve unit in the first valve unit group and that rotates two of the valve elements overlapping in the direction of the rotation axis in conjunction, such that a communicated state among the first inlet/outlet opening, the second inlet/outlet opening, and the third inlet/outlet opening is selectively switched through the flow path of the valve element.

4. The flow path switching valve according to claim 3, wherein:
a heat exchanger configured to apply heat to the fluid is connectable between the second flow path of the first valve unit group and the second flow path of the second valve unit group,
a first element among the three elements is connectable between the first flow path of the first valve unit group and the first flow path of the second valve unit group,
a second element among the three elements is connectable between the third flow path of one of the valve units in the first valve unit group and the third flow path of one of the valve units in the second valve unit group, and
a third element among the three elements is connectable between the third flow path of another of the valve units in the first valve unit group and the third flow path of another of the valve units in the second valve unit group.
